(19) **Europäisches Patentamt / European Patent Office / Office européen des brevets**

(11) **EP 4 681 520 A1**

(12) **EUROPEAN PATENT APPLICATION**
published in accordance with Art. 153(4) EPC

(43) Date of publication:
**21.01.2026 Bulletin 2026/04**

(21) Application number: **23929810.2**

(22) Date of filing: **05.09.2023**

(51) International Patent Classification (IPC):
**A01D 34/00** (2006.01)

(52) Cooperative Patent Classification (CPC):
**A01D 34/00**

(86) International application number:
**PCT/CN2023/116872**

(87) International publication number:
**WO 2024/198236 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.03.2023 CN 202310358486**

(71) Applicant: **Shenzhen LDrobot Co., Ltd.**
**Shenzhen, Guangdong 518000 (CN)**

(72) Inventors:
• **LI, Shaohai**
  **Shenzhen, Guangdong 518000 (CN)**
• **CHEN, Quan**
  **Shenzhen, Guangdong 518000 (CN)**
• **LI, Ang**
  **Shenzhen, Guangdong 518000 (CN)**
• **GUO, Gaihua**
  **Shenzhen, Guangdong 518000 (CN)**
• **ZHOU, Wei**
  **Shenzhen, Guangdong 518000 (CN)**

(74) Representative: **impuls legal PartG mbB**
**Goethestraße 21**
**80336 München (DE)**

(54) **CONTROL METHOD AND DEVICE FOR MOWER, AND STORAGE MEDIUM**

(57) A control method for a mower. The method comprises: when charging of a mower (101) has been completed, controlling the mower (101) to exit by a first preset distance from an entrance and exit side of a charging station (102) to reach a first preset position, then controlling the mower (101) to move forward from the first preset position and bypass the charging station (102), so as to reach a back side of the charging station (102), the back side being opposite to the entrance and exit side, and subsequently, performing an operation at the back side of the charging station (102). Thus, after charging is completed at a charging station, a mower can perform an operation on the other side of the charging station, thereby improving the operation efficiency of the mower. A control device for a mower, and a storage medium are further involved.

```
┌─────────────────────────────────────────────────┐
│ Upon completion of charging, controlling the     │──── S501
│ mower to exit by a first preset distance from an  │
│ entrance and exit side of a charging station to   │
│ reach a first preset position                     │
└─────────────────────────────────────────────────┘
                        │
                        ▼
┌─────────────────────────────────────────────────┐
│ Controlling the mower to move forward from the    │──── S502
│ first preset position and bypass the charging     │
│ station to reach a back side of the charging      │
│ station, which is opposite to the entrance and    │
│ exit side of the charging station                 │
└─────────────────────────────────────────────────┘
                        │
                        ▼
┌─────────────────────────────────────────────────┐
│ Controlling the mower to operate at the back side │──── S503
│ of the charging station                           │
└─────────────────────────────────────────────────┘
```

FIG. 5

**Description**

**CROSS-REFERENCE TO RELATED APPLICATION**

The present disclosure claims priority of the Chinese patent application No. 2023103584865, entitled "CONTROL METHOD AND DEVICE FOR MOWER, AND STORAGE MEDIUM", filed March 27, 2023 with the China National Intellectual Property Administration, the entire contents of which are incorporated herein by reference.

**TECHNICAL FIELD**

The present disclosure relates to the technical field of intelligent mowers, and in particular, to a control method and device for a mower, and a storage medium.

**BACKGROUND**

An intelligent mower (hereinafter referred to as a "mower"), as a landscaping tool used to trim lawns, vegetation, and the like, typically includes a self-propelled mechanism, a cutting blade mechanism, and a power source. The power source may be a battery pack, or the like. Due to the constraints of battery energy density, battery production cost and other factors, the battery pack carried by the mower generally has a limited capacity, which restricts the mowing area per operation. When the lawn area is relatively large, the mower needs to return to a charging station for charging after working for a certain period of time. Once the charging is completed, the mower leaves the charging station and returns to the working region to resume the mowing operation.

The existing mower is typically provided with a charging electrode sheet at a front part. When the mower returns to the charging station for charging, the front part moves to a charging port to be connected with a charging electrode sheet of the charging station. Once the charging is completed, the mower is disconnected from the charging station, turns around in front of the charging port, and moves in a direction away from the charging station to resume the operation.

This recharging solution results in the mower having to perform an in-place turnaround, returning to the position where the mowing is to be continued, and performing posture adjustment each time charging is completed before it can resume mowing. This not only increases the burden on the mower, but also significantly affects the operation efficiency of the mower.

How to improve the operation efficiency of a mower after charging is a technical problem that needs to be solved by those of ordinary skills in the art.

**SUMMARY**

Embodiments of the present disclosure aim to provide a control method and device for a mower, and a storage medium, to solve the technical problem of low operation efficiency of the mower in the existing technology.

**TECHNICAL SOLUTIONS**

The technical solutions adopted in the embodiments of the present disclosure are as follows.

In accordance with an embodiment of the present disclosure, in a first aspect, provided is a control method for a mower, which includes:

upon completion of charging, controlling the mower to exit by a first preset distance from an entrance and exit side of a charging station to reach a first preset position;

controlling the mower to move forward from the first preset position and bypass the charging station to reach a back side of the charging station, where the back side is opposite to the entrance and exit side of the charging station; and

controlling the mower to perform an operation at the back side of the charging station.

In an embodiment, the controlling the mower to exit by a first preset distance from an entrance and exit side of a charging station to reach a first preset position includes:
controlling the mower to exit by the first preset distance from the entrance and exit side of the charging station to reach the first preset position based on a first wire, where the first wire is a wire wound around a working region of the mower.

In an embodiment, the controlling the mower to exit by a first preset distance from an entrance and exit side of a charging station to reach a first preset position includes:
controlling the mower to exit by the first preset distance from the entrance and exit side of the charging station according to a different retreating path each time to reach a different first preset position.

In an embodiment, the controlling the mower to move forward from the first preset position and bypass the charging station to reach a back side of the charging station includes:

determining a first posture in which the mower starts operating at the back side of the charging station; generating a first path along which the mower moves forward from the first preset position to an operation position according to the first posture; and controlling the mower to move forward from the first preset position along the first path to the operation position.

In an embodiment, the generating a first path along which the mower moves forward from the first preset position to an operation position according to the first posture includes:

generating the first path along which the mower moves forward from the first preset position along a second wire to the operation position according to the first posture, where the second wire is a wire wound around the charging station.

In an embodiment, the first path satisfies that an angle of the mower adjusted at the operation position is less than a first preset angle.

In an embodiment, the determining a first posture in which the mower starts operating at the back side of the charging station includes:

for each operation, determining a different first posture in which the mower starts operating at the back side of the charging station.

In an embodiment, the controlling the mower to move forward from the first preset position and bypass the charging station to reach a back side of the charging station includes:

controlling the mower to move forward from the first preset position and bypass the charging station from any one of left and right sides of the charging station to reach the back side of the charging station.

In an embodiment, the controlling the mower to move forward from the first preset position and bypass the charging station to reach a back side of the charging station includes:

controlling the mower to move forward from the first preset position and bypass the charging station from left and right sides of the charging station alternately to reach the back side of the charging station.

In an embodiment, before the controlling the mower to move forward from the first preset position and bypass the charging station to reach a back side of the charging station, the method includes:

controlling the mower to rotate from the first preset position to left and right sides of the charging station respectively, and determining, by a magnetic induction sensor, a magnetic field intensity on the left and right sides of the charging station; and
determining an inside of the working region and an outside of the working region according to the magnetic field intensity on the left and right sides of the charging station.

In an embodiment, the determining, by a magnetic induction sensor, a magnetic field intensity on the left and right sides of the charging station includes:

during controlling the mower to rotate from the first preset position to the left and right sides of the charging station respectively, detecting, by the magnetic induction sensor, a change in the magnetic field intensity on the left and right sides of the charging station; and

determining a first magnetic field intensity and a second magnetic field intensity according to the change in the magnetic field intensity, where the first magnetic field intensity is a maximum value of the magnetic field intensity detected by the magnetic induction sensor during rotation of the mower to the left side of the charging station, and the second magnetic field intensity is a maximum value of the magnetic field intensity detected by the magnetic induction sensor during rotation of the mower to the right side of the charging station.

In an embodiment, during controlling the mower to rotate from the first preset position to the left and right sides of the charging station respectively, the method further includes:

detecting the magnetic field intensity on the left and right sides of the charging station;

controlling the mower to rotate at a reduced speed in response to the magnetic field intensity changing from increasing to decreasing;

controlling the mower to stop rotating in response to the mower rotating to a second preset angle.

In an embodiment, the determining an inside of the working region and an outside of the working region according to the magnetic field intensity on the left and right sides of the charging station includes:

in response to the first magnetic field intensity being greater than the second magnetic field intensity, determining that the left side of the charging station is the inside of the working region and the right side of the charging station is the outside of the working region; and

in response to the first magnetic field intensity being less than the second magnetic field intensity, determining that the right side of the charging station is the inside of the working region and the left side of the charging station is the outside of the working region.

In an embodiment, the controlling the mower to rotate from the first preset position to left and right sides of the charging station respectively includes:

controlling the mower to rotate from the first preset position to the left and right sides of the charging station by a third preset angle, where the third preset angle is not less than an angle at which the magnetic induction sensor detects a maximum magnetic field intensity.

In an embodiment, the magnetic induction sensor is provided in plural, and the third preset angle includes an angle at which any one of the magnetic induction sensors detects the maximum magnetic field intensity.

In an embodiment, the controlling the mower to rotate from the first preset position to left and right sides of the charging station respectively includes:
controlling the mower to shift from the first preset position to the left and right sides of the charging station by a second preset distance respectively, where the second preset distance is not less than a distance at which the magnetic induction sensor detects a maximum magnetic field intensity.

In an embodiment, the magnetic induction sensor is provided in plural, the second preset distance includes a distance at which any one of the magnetic induction sensors detects the maximum magnetic field intensity.

In accordance with an embodiment of the present disclosure, in a second aspect, provided is a control device for a mower, which includes:

a memory configured to store a computer program; and

a processor configured to execute the computer program, where the computer program, when executed by the processor, implements the control method for a mower as described in the first aspect.

In accordance with an embodiment of the present disclosure, in a third aspect, provided is a storage medium storing a computer program, where the computer program, when executed by a processor, implements the control method for a mower as described in the first aspect.

ADVANTAGEOUS EFFECTS

The control method and device for a mower, and the storage medium provided by the embodiments of the present disclosure have the advantageous effects as follows. Upon completion of charging, the mower is controlled to exit by a first preset distance from an entrance and exit side of a charging station to reach a first preset position, then the mower is controlled to move forward from the first preset position and bypass the charging station to reach a back side of the charging station opposite to the entrance and exit side, and subsequently, the mower is controlled to operate at the back side of the charging station. Thus, after charging is completed at a charging station, the mower can perform an operation on the other side of the charging station without turning around on the spot at the entrance and exit side of the charging station for returning to the breakpoint position, which results in wasting a lot of time on a return path, thereby effectively improving the operation efficiency of the mower and reducing the number of times the mower needs to turn around on the spot, and thus alleviating the burden on the mower and extending the service life of the mower.

BRIEF DESCRIPTION OF DRAWINGS

In order to more clearly illustrate the technical solutions in the embodiments of the present disclosure or the prior art, the drawings to be used in the description of the embodiments or the prior art will be briefly introduced below. Obviously, the drawings described below are only some embodiments of the present disclosure. Those having ordinary skill in the art can obtain other drawings based on these drawings without any creative effort.

FIG. 1 is a schematic diagram showing a position relationship between a mower and a charging station during charging;

FIG. 2 is a schematic diagram of a wire provided in an embodiment of the present disclosure;

FIG. 3 is a schematic principal diagram of precise positioning based on a wire provided in an embodiment of the present disclosure;

FIG. 4 is a schematic waveform diagram of precise positioning based on a wire provided in an embodiment of the present disclosure;

FIG. 5 is a flow chart of a control method for a mower provided in an embodiment of the present disclosure;

FIG. 6 is a schematic diagram showing a mower provided by an embodiment of the present disclosure retreats to a first preset position;

FIG. 7 is a schematic diagram showing a mower provided in an embodiment of the present disclosure bypasses a charging station; and

FIG. 8 is a schematic structural diagram of a control device for a mower provided in an embodiment of the present disclosure.

DETAILED DESCRIPTION

In order to make the objectives, technical solutions and advantages of the present disclosure clearer, the present disclosure will be further described in detail below in conjunction with the accompanying drawings and the embodiments. It should be appreciated that the specific embodiments described herein are only intended to explain the present invention and are not intended to limit the present disclosure.

It should be noted that when a component is referred to as being "fixed to" or "arranged on" another component, it may be directly on the another component or indirectly on the another component. When a component is referred to as being "connected to" another component, it may be directly or indirectly connected to the another component. The directions or position relationships indicated by the terms "upper", "lower", "left", "right", and the like are based on the directions or position relationships shown in the accompanying drawings and are only for the convenience of description. They do not indicate or imply that the devices or elements referred to must have a specific direction, be constructed and operated in a specific direction. Therefore, they cannot be understood as limitations on the present disclosure. For those having ordinary skill in the art, the specific meanings of the above terms can be understood according to specific circumstances. The terms "first" and "second" are only used for descriptive purposes and should not be understood as indicating or implying relative importance or implicitly specifying the number of technical features. The term "a plurality" means two or more, unless otherwise clearly and specifically defined.

In order to illustrate the technical solutions provided by the present disclosure, a detailed description is given below in conjunction with specific drawings and embodiments.

Embodiment one

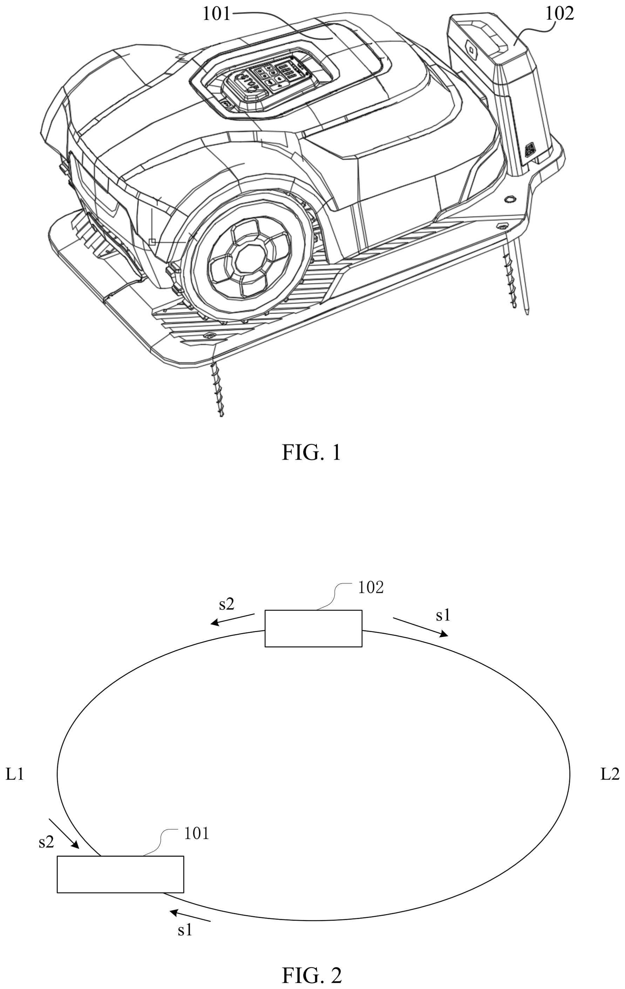

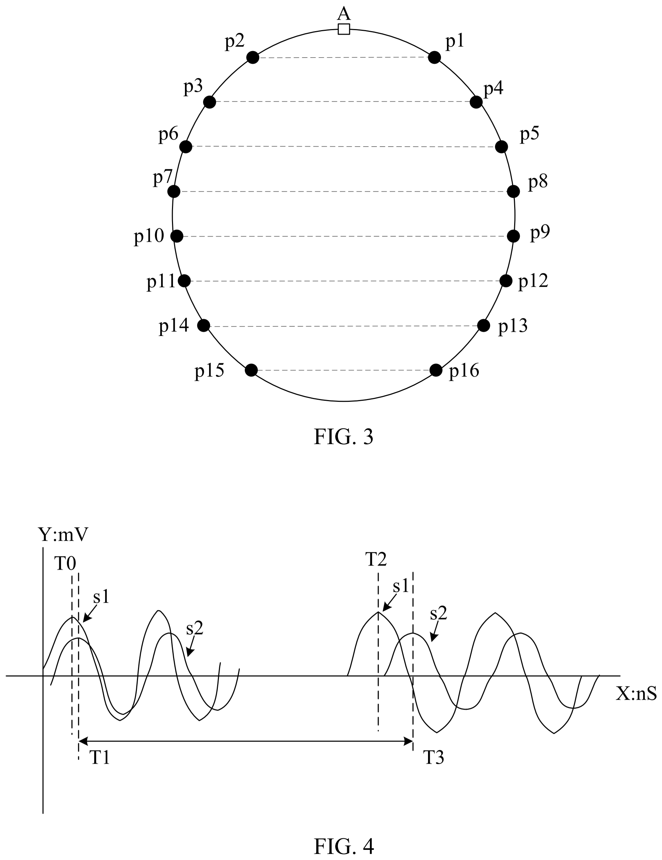

FIG. 1 is a schematic diagram showing a position relationship between a mower and a charging station during charging. FIG. 2 is a schematic diagram of a wire provided in an embodiment of the present disclosure. FIG. 3 is a schematic principal diagram of precise positioning based on a wire provided in an embodiment of the present disclosure. FIG. 4 is a schematic waveform diagram of precise positioning based on a wire provided in an embodiment of the present disclosure.

The mower, charging station, positioning method, and the like involved in the control method for a mower provided in the embodiment of the present disclosure are described first. These descriptions are only for the convenience of understanding the solutions, and are not intended to limit that the apparatus and device involved in the control method for a mower provided in the embodiment of the present disclosure must be based on such a structure or principle.

The mower targeted by the embodiment of the present disclosure may specifically include a mower body, a sensor and a mower controller.

The mower body may include a cutter head, an engine, a walking wheel, a walking mechanism, a blade, a handrail, and the like, and may perform wire-following mapping, wire-following mowing, or in-region mowing and other operation tasks in a working region under the control of the mower controller.

To facilitate user control, the mower may further include a host computer located outside the mower body. The host computer may be a terminal device such as a mobile phone, a tablet computer, a personal computer, or the like, which may be communicatively connected with the mower controller in a wireless communication manner (such as Bluetooth, Wi-Fi), run mower control software, and provide the user with a control interface, a mowing visualization interface, and the like. Thus, the control method for a mower provided in the embodiment of the present disclosure may be applied to the mower controller, and may also be applied to the host computer of the mower controller.

The sensor is arranged on the mower body and is used to provide the mower controller with a positioning signal of the mower body, environment information about an environment where the mower body is located, and an external reference signal for sensing and assisting the mower in positioning. In the embodiment of the present disclosure, if the mower continues to perform an operation task after automatic recharging, the sensor may include a first sensor, a second sensor and a third sensor. The first sensor is used to collect a real-time positioning signal and send the signal to the mower controller to locate a real-time position of the mower body, and may be a positioning coil, a gyroscope, a Global Positioning System (GPS), and other sensors. The second sensor is used to detect an obstacle in a path where the mower travels, and may be a laser sensor, a visual sensor, a temperature sensor, and the like. The third sensor is used to sense a wire arranged in the working region and obtain a precise positioning signal from the wire. The third sensor needs to be set in conjunction with the wire, and may be an electromagnetic sensor, a photodetector, a temperature sensor, a visual sensor, and the like. It should be noted that the setting of the first sensor, the second sensor and the third sensor is only a schematic functional representation. It does not imply that each type of sensor must include at least one individual sensor. For example, some types of sensors may have one or more of the above functions, or some of the sensors may not be provided.

The charging station is a charging device corresponding to the mower, which may be fixedly arranged in the working region of the mower, at the boundary of the working region of the mower or outside the working region of the mower. The charging station may include a charging station body, a charging cable, a charging connector, and the like. The charging connector is arranged at a position of the charging station body that is convenient for corresponding to a charging connector on the mower. A first end of the charging cable is connected to the charging connector, and a second end of the charging cable may be connected to a battery or the mains supply.

As shown in FIG. 1, a limiting device may be set for the mower 101 at a position where a charging electrode sheet of the charging station 102 faces, including but not limited to a limiting track, a limiting fence, a limiting mark, and the like, such that the mower 101 detects the limiting track and travels into the charging station 102 along the limiting track to accurately dock with the charging electrode sheet. After being fully charged, the mower 101 exits the limit track and moves to a position where mowing operation is continued.

The wire mentioned above is an auxiliary positioning apparatus arranged in the working region of the mower 101, which is arranged in conjunction with the third sensor. Specifically, the wire may be arranged around the working region, within the working region, or at a position outside a boundary line of the working region and close to the boundary line of the working region, and may be laid on the ground surface or embedded underground. For ease of implementation, a precise positioning signal may be provided by the wire, and the third sensor collects the precise positioning signal and sends the signal to the controller of the mower 101 to achieve precise positioning of the target mower 101. A precise positioning system composed of the wire and the third sensor enables the target mower 101 to identify the wire and acquire the positioning signal from the wire based on electromagnetic induction, photoelectric induction, temperature induction, vision, and the like, so as to precisely position the target mower 101 itself, and can correct the positioning signal measured by the first sensor.

Please refer to FIG. 2, FIG. 3, and FIG. 4, an embodiment of the present disclosure provides a solution of precisely positioning the mower 101 based on a wire. By arranging a signal providing apparatus on the wire and/or the device on the wire, the target mower 101 can identify the wire and precisely position itself after entering a sensing region of the wire. The signal providing apparatus may be a wire, a light emitter, a heater, an electronic tag, an agreed pattern, or the like. Correspondingly, the third sensor may be an electromagnetic sensor, a photoelectric sensor, a temperature sensor, a card reader, a camera, or the like. As shown in FIG. 2, an implementation in which a signal generator and a signal receiver are adopted is further described with reference to an embodiment of the present disclosure. Specifically, both ends of the wire may be connected to the charging station 102, the signal generator and the signal receiver are respectively arranged on the charging station 102 and the mower 101, and the mower 101 interacts with the charging station 102 to obtain its precise position on the wire.

As shown in FIG. 2, a solution is provided, in which the wire is used as a signal wire for transmitting a signal, and the charging station 102 and the mower 101 are used as a signal generator and a signal receiver respectively. The signal generator transmits a first signal s1 and a second signal s2 to the signal receiver in two directions of the wire respectively. According to the situation where the signal receiver receives the first signal s1 and the second signal s2, the path lengths from the signal receiver to the signal generator in the two directions of the wire may be obtained respectively, so as to precisely position the target mower 101 on the wire. FIG. 2 is a schematic diagram showing that the signal generator is arranged on the charging station 102 and the signal receiver is arranged on the target mower 101. In practical applications, on the contrary, the signal generator may be arranged on the target mower 101 and the signal receiver may be arranged on the charging station 102. The charging station 102 determines the precise position of the target mower 101 on the wire according to the first signal s1 and the second signal s2, and then feeds back information about the position to the target mower 101 through wireless communication.

As shown in FIG. 3, assuming that A is the position of the charging station 102, sixteen path nodes such as pl to p16 may be set on the wire. The mower 101 may be controlled to perform a mowing operation along the path of p16-p15-p14-...-p2-p1 (or vice versa), that is, the mower 101 travels in a straight line in the working region for mowing, reaches a path node on the wire, travels on the wire along the path node to the next path node for steering adjustment and precise positioning, then turns around and returns to the working region to continue the mowing operation in a straight line until it travels to the next path node on the wire. That is to say, every time the mower 101 reaches the wire, it can obtain a precise position.

Taking the example that the mower 101 and the charging station 102 arranged on the wire are provided with a signal transmitter and a signal receiver respectively, the method for precisely positioning the mower 101 based on the wire may specifically include:

determining a difference in distance between the signal generator and the signal receiver on the wire in two directions of the wire according to a transmission time difference or a phase difference between the first signal and the second signal sent by the signal generator to the signal receiver in the two directions of the wire, and then determining a relative position between the signal generator and the signal receiver; and

determining a first precise position of the target mower 101 according to the relative position between the signal generator and the signal receiver;

where the signal generator is arranged on the target mower 101, and the signal receiver is arranged on the charging station 102; alternatively, the signal receiver is arranged on the target mower 101, and the signal generator is arranged on the charging station 102.

Specifically, the signal generator may send out the first signal and the second signal at the same moment, or send out the first signal and the second signal at different moments. A transmission time of the first signal is determined through the transceiving time of the first signal, and a transmission time of the second signal is determined through the transceiving time of the second signal. In this way, the transmission time difference or phase difference between the first signal and the second signal may be determined.

As shown in FIG. 2 and FIG. 4, assuming that the signal generator is arranged on the charging station 102 and the signal receiver is arranged on the mower 101, when the target mower 101 moves onto the wire, the first signal s1 transmitted by the charging station 102 in the clockwise direction at time T0 is received at time T1, and the second signal s2 transmitted by the charging station 102 in the counterclockwise direction at time T2 is received at time T3. Assuming that the wire length from the mower 101 to the charging station 102 in the clockwise direction is L2, and the wire length from the target mower 101 to the charging station 102 in the counterclockwise direction is L1, the wire length is calculated by the following formula:

$$L1-L2=[T3-T1-(T2-T0)]*V;$$

$$L1+L2=L;$$

where V is the velocity at which the first signal s1 and the second signal s2 are transmitted along the wire, and L is the total wire length.

By detecting T3/T1, the precise position of the mower 101 on the wire may be obtained.

In the solutions shown in FIG. 2, FIG. 3, and FIG. 4, the signal generator is arranged on the charging station 102. However, in addition to this, the signal generator may also be arranged at any position on the wire, and is not limited to being arranged on the charging station 102.

Embodiment two

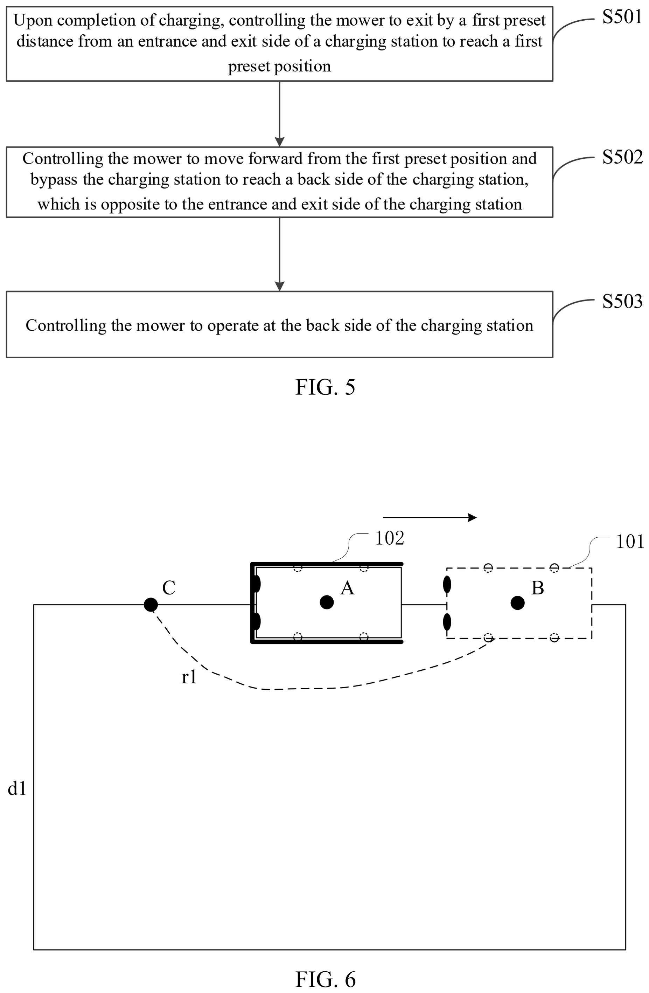

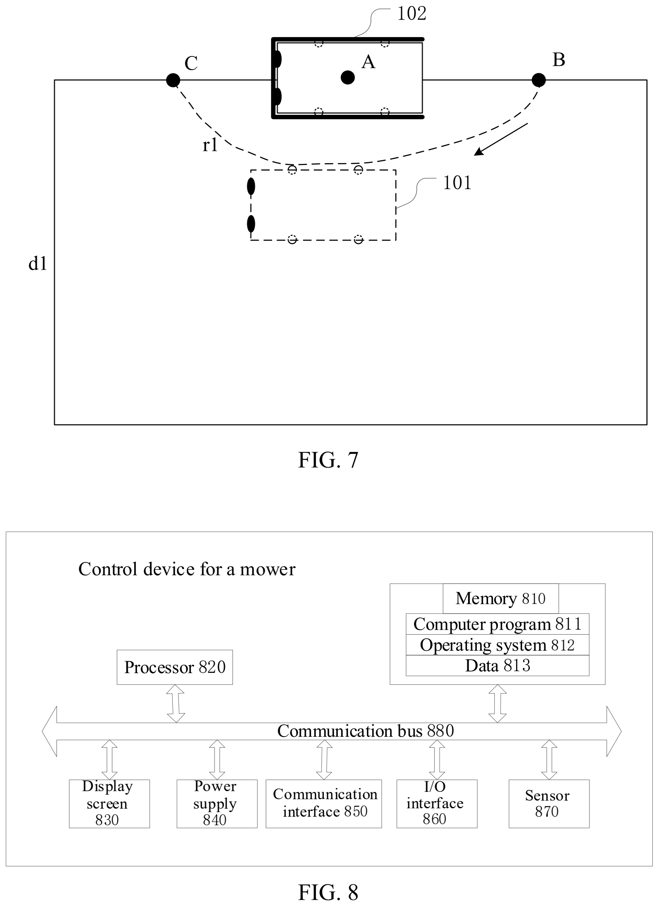

FIG. 5 is a flow chart of a control method for a mower provided in an embodiment of the present disclosure. FIG. 6 is a schematic diagram showing a mower provided by an embodiment of the present disclosure retreats to a first preset position. FIG. 7 is a schematic diagram showing a mower provided in an embodiment of the present disclosure bypasses a charging station.

As shown in FIG. 5, the control method for a mower provided in the embodiment of the present disclosure includes:

S501: upon completion of charging, controlling the mower to exit by a first preset distance from an entrance and exit side of a charging station to reach a first preset position;
S502: controlling the mower to move forward from the first preset position and bypass the charging station to reach a back side of the charging station, which is opposite to the entrance and exit side of the charging station; and
S503: controlling the mower to operate at the back side of the charging station.

There are three main operation modes for the mower: wire-following mapping mode, wire-following mowing mode, and in-region mowing mode. The wire-following mapping mode typically involves an operation task performed by the mower when it reaches a new working region or an unknown working region range. Specifically, the mower travels along a wire pre-arranged in a working region by itself by identifying a boundary signal of the wire, to determine a range of the working region. The wire-following mowing mode is a mode of mowing along a wire. The wire here may include a boundary wire arranged around the working region or a wire arranged inside the working region. The in-region mowing mode is a mode of mowing in a working region. When mowing in the working region, the mower may be positioned in conjunction the real-time position sensed by its first sensor and the position of the wire sensed by the third sensor, and performs mowing operation while travelling.

The control method for a mower provided in the embodiment of the present disclosure may be directed to but not limited to the above three operation modes. In any operation mode, when needing to be charged, the mower plans its own path to the charging station for charging. After charging is completed, the existing solution is that the mower returns from the charging station to the breakpoint position (i.e., the position where it is determined to pause the operation and perform charging) to continue the operation. As the breakpoint position varies, the mower may need to turn sharply on the spot and travel a longer path to reach the breakpoint position, which not only increases the burden on the mower, but also makes the mower idle on the return path, resulting in low operation efficiency. In this regard, by means of the control method for a mower provided in the embodiment of the present disclosure, the mower is controlled to exit a charging station from an entrance and exit side of the charging station (for example, a region with a limiting track toward which the charging electrode sheet shown in FIG. 1 faces) when charging is completed, move by a first preset distance to reach a first preset position, and after leaving room for turning, move forward to bypass the charging station and perform an operation at a back side of the charging station (the other side of the entrance and exit of the charging station) without turning around on the spot for return, which results in wasting a lot of time on a return path, thereby effectively improving the operation efficiency of the mower.

In a specific implementation, for S501, as shown in FIG. 6 and FIG. 7, a starting point and an end point of a boundary wire d1 intersect at the charging station 102, the charging station 102 is located at a point A (which may be a center point of the charging station 102), and the mower 101 is provided with a charging electrode sheet at a front part. When the power of the mower 101 is low, the mower 101 moves from the entrance and exit side of the charging station 102 to the charging station 102 and docks with the charging electrode sheet of the charging station 102 for charging. After charging of the mower 101 is completed, the mower 101 exits from the entrance and exit side of the charging station 102 and further moves to a first preset position B away from the charging station 102. The first preset position B may be a position reached by the mower 101 when retreating in a straight line by a first preset distance after exiting from the entrance and exit side of the charging station 102, or may be a position reached by the mower 101 when retreating to the left rear or to the right rear after exiting from the entrance and exit side of the charging station 102. For example, as shown in FIG. 6, the mower 101 retreats and bypasses from the left side of the charging station 102, the first preset position B may be a position reached by the mower 101 when retreating to the right rear after exiting from the entrance and exit side of the charging station 102, such that the mower 101 adjusts its heading to face the left side of the charging station 102 during the retreating process without turning on the spot at the first preset position B. Alternatively, if the mower 101 is desired to retreat and bypass the charging station 102 from the right side of the charging station 102, the first preset position B may be a position reached by the mower 101 when retreating to the left rear after exiting from the entrance and exit side of the charging station 102, such that the mower 101 adjusts its heading to face the right side of the charging station 102 during the retreating process without turning on the spot at the first preset position B.

It should be noted that the position of the charging station 102 mentioned in the embodiment of the present disclosure is not limited to the scenario shown in FIG. 6 and FIG. 7 where the charging station 102 is located on the wire d1 (the boundary wire, which is arranged through the central axis of the charging station 102), that is, the charging station 102 may be located at the boundary of the working region, or may be located outside the boundary of the working region. The entrance and exit side of the charging station 102 and the back side of the charging station 102 may respectively be oriented in two directions of the boundary wire as shown in FIG. 6 and FIG. 7. Alternatively, one side may face the inside of the working region and the other side may face the outside of the working region, or they may face any other direction. Therefore, in the embodiment of the present disclosure, only the entrance and exit side of the charging station 102 and the back side of the charging station 102 are used as the basis for dividing regions. When starting an operation, the mower 101 may perform the operation in a region which the entrance and exit side of the charging station 102 faces according to the divided regions, and go to the charging station 102 halfway for charging and then continue the operation from the back side of the charging station 102 after being fully charged, thereby achieving efficient operation.

For S502, as shown in FIG. 6 and FIG. 7, the mower 101 is controlled to move forward from the first preset position B and bypass the charging station 102, and then arrive at the back side of the charging station 102 (i.e., another region compared to the working region before charging). The first path taken during the bypassing process may be shown as r1, but is not limited to r1.

In order to facilitate the mower 101 to make accurate bypassing, the mower 101 is controlled to perform positioning on the first path based on the signal provided around the charging station 102. Since the charging station 102 is provided with a charging pile wire (i.e., a charging wire around a charging pile), a magnetic field signal of the charging pile wire may be sensed by an electromagnetic sensor arranged on the mower 101 based on the principle of electromagnetic induction, thereby enabling the mower 101 to travel along the edge of the charging station 102 without additionally arranging an auxiliary positioning apparatus. Alternatively, a wire for positioning may be pre-arranged around the charging station 102. The wire may be arranged in a groove beneath the charging station 102 and may also be powered on to enable the mower 101 to sense the position of the wire based on the principle of electromagnetic induction. Alternatively, the mower 101 may sense the wire and bypass the charging station 102 along the wire based on the solution of precise positioning based on the wire as provided in embodiment one of the present disclosure.

According to the type of the signal that assists the mower 101 in bypassing the charging station 102, a position relationship between the mower 101 and a signal source during bypassing is further set. For example, a wire at position r1 as shown in FIG. 6 and FIG. 7 is set. When the mower 101 is controlled at the first preset position B, the wire is located between the walking wheels on both sides. In the process of moving forward along the first path, the mower 101 is continuously adjusted to make the wire close to the walking wheel on the side of the mower 101 near the charging station 102, until the walking wheel on the side of the mower 101 near the charging station 102 is close to, coincident with, or crosses the wire (such that the wire is located at a position by a third preset distance outside the running wheel), the distance that enables the mower 101 to sense the wire is maintained, and the posture of the mower 101 is continuously adjusted.

Based on the solution of precise positioning based on the wire provided in embodiment one of the present disclosure, the signal for assisting the mower 101 in bypassing the charging station 102 may also be a signal for assisting the mower 101 in positioning on the first path. Thus, after identifying the wire, the mower 101 may be precisely positioned based on the wire to accurately and smoothly travel to the position where mowing operation is continued.

For S503, in different operation modes, the mower 101 may be controlled to perform the operation from the back side of the charging station 102 according to corresponding modes of continuing operation respectively, or the mower 101 may be controlled according to the setting to switch to another operation mode to continue the operation after reaching the back side of the charging station 102. As mentioned above, the back side of the charging station 102 may include a pre-divided region which the back side of the charging station 102 faces. Thus, the operation performed from the back side of the charging station 102 in S503 may be performed based on a pre-determined position where mowing operation is continued (according to different operation modes), or may be performed at a re-planned position where mowing operation is continued.

Specifically, performing the operation from the back side of the charging station 102 in S503 may include: performing the operation from the back side of the charging station 102 along the boundary wire of the mower. In a case where the operation mode of the mower 101 is the wire-following operation mode (including but not limited to the wire-following mapping mode and the wire-following mowing mode), the planned position where mowing operation is continued may be at the boundary wire on the back side of the charging station 102.

On this basis, the mower 101 may also perform the wire-following operation in the direction of entering the entrance and exit side of the charging station 102. Specifically, referring to FIG. 6 and FIG. 7, in the wire-following operation mode, assuming that the mower 101 travels clockwise around the boundary wire d1 when performing the operation before charging, and goes to the charging station 102 halfway when needing to be charged and enters the charging station 102 from the entrance and exit side of the charging station 102 for charging. After charging, the mower 101 retreats from the entrance and exit side of the charging station 102 to the first preset position B, bypasses the charging station 102 along the path r1, arrives at a position C located on the back side of the charging station 102 and located on the boundary wire d1, and then continues the wire-following mapping operation or wire-following mowing operation from the position C. Therefore, it is ensured that the charging direction and moving direction of the mower 101 are the same, and the mower 101 may directly move to the charging station 102 for charging without turning around.

In the in-region mowing mode, the mowing blade and other mowing elements may be started to continue the operation after the mower 101 reaches the back side of the charging station 102 from the first preset position B, just like the wire-following operation mode. Alternatively, the mowing blade and other mowing elements may be started to continue the operation after retreating to the first preset position B, thereby further improving the efficiency of the in-region mowing operation.

In the control method for a mower provided in the embodiment of the present disclosure, upon completion of charging, the mower is controlled to exit by a first preset distance from an entrance and exit side of a charging station to reach a first preset position, then the mower is controlled to move forward from the first preset position and bypass the charging station to reach a back side of the charging station opposite to the entrance and exit side. Subsequently, the mower is controlled to perform an operation at the back side of the charging station. Thus, after charging is completed at a charging station, the mower can perform an operation on the other side of the charging station without turning around on the spot at the entrance and exit side of the charging station for returning to the breakpoint position, which results in wasting a lot of time on the return path, thereby effectively improving the operation efficiency of the mower and reducing the number of times the mower needs to turn around on the spot, and thus alleviating the burden on the mower and extending the service life of the mower.

Embodiment three

On the basis of the above embodiment, in the control method for a mower provided in the embodiment of the present disclosure, controlling the mower to exit by the first preset distance from the entrance and exit side of the charging station to reach the first preset position in S501 may specifically include:
controlling the mower to exit by the first preset distance from the entrance and exit side of the charging station according to a different retreating path each time to reach a different first preset position.

In a specific implementation, in order to prevent the mower from taking the same path when exiting from the entrance and exit side of the charging station to the first preset position, which causes serious damage to the lawn on the path, the mower is controlled to go to a different first preset position each time from the entrance and exit side of the charging station, thereby passing through a different retreating path. Achieving different first preset positions may be done by varying the first preset distance itself. For example, if the mower retreats in a straight line each time, the first preset distance after the first charging may be one meter, and the first preset distance after the second charging may be two meters, and so on. When the mower does not retreat in a straight line, the mower may also retreat at a different angle each time, or retreat at the same angle by a different first preset distance, so as to reach a different first preset position and pass through a different retreating path after each charging.

Meanwhile, if the mower bypasses the charging station along the same path after each charging, controlling the mower to move forward from the first preset position and bypass the charging station to reach the back side of the charging station in S502 may specifically include: controlling the mower to move forward from the first preset position and bypass the charging station from any one of left and right sides of the charging station to reach the back side of the charging station.

That is to say, at the first preset position in front of the charging station, the mower may be controlled to move forward along a path on the left side of the charging station and bypass the charging station. The mower may also be controlled to move forward along a path on the right side of the charging station and bypass the charging station. The solution is simple and does not require planning a plurality of paths.

In another embodiment, if the mower bypasses the charging station along the same path after each charging, the lawn on the path may be seriously damaged. Therefore, considering the issue of lawn protection, controlling the mower to move forward from the first preset position and bypass the charging station to reach the back side of the charging station in S502 may specifically include:

controlling the mower to move forward from the first preset position and bypass the charging station from left and right sides of the charging station alternately to reach the back side of the charging station.

Generally, controlling the mower to bypass the charging station from one side of the charging station may include controlling the mower to move forward from the first preset position B and bypass the charging station from the left and right sides of the charging station alternately to reach the back side of the charging station.

While controlling the mower to move forward from the first preset position and bypass the charging station from left and right sides of the charging station alternately to reach the back side of the charging station, the mower may also be controlled to adopt a different bypassing path when bypassing the charging station from each side of the charging station to reduce damage to the lawn on the same path.

The left and right sides of the charging station may be a side inside the working region and a side outside the working region respectively. Therefore, before S502, at the first preset position, the mower is controlled to rotate to the left and right sides of the charging station respectively, and a magnetic field intensity on both sides of the charging station can be determined by a magnetic induction sensor in the mower. Based on the magnetic field intensity on both sides of the charging station, an inner side of the working region and an outer side of the working region can be determined. Then the mower can be controlled to move forward from the first preset position and bypass the charging station to reach the back side of the charging station according to the determination.

That is to say, at the first preset position, the magnetic field intensity detected by the magnetic induction sensor may be used to determine which side of the left and right sides of the charging station is the inside of the working region and which side is the outside of the working region. Specifically, after the working region is determined, the mower may be controlled to move forward from the first preset position and bypass the charging station from the inside or outside of the working region to reach the back side of the charging station. The mower may also be controlled to bypass the charging station from the inside of the working region and the outside of the working region alternately according to a preset rule to reach the back side of the charging station.

The preset rule may be that the mower travels from the inside of the working region and the outside of the working region alternately in sequence, that is, the mower takes the path inside the working region once and the path outside the working region the next time alternately in sequence, or may travel inside the working region for a preset number of times and then outside the working region for a preset number of times alternately in sequence, or may also travel inside the work region for n times and then outside the work region for m times alternately in sequence, where n and m are not equal.

In an embodiment, since the magnetic induction sensor is installed on the mower and is fixed relative to the mower, the step of determining the magnetic field intensity on the left and right sides of the charging station by the magnetic induction sensor specifically includes: when controlling the mower to rotate from the first preset position to the left and right sides of the charging station, detecting a change in the magnetic field intensity on the left and right sides of the charging station by the magnetic induction sensor; and determining a first magnetic field intensity and a second magnetic field intensity according to the change in the magnetic field intensity, where the first magnetic field intensity is a maximum value of the magnetic field intensity detected by the magnetic induction sensor during the rotation of the mower to the left side of the charging station, and the second magnetic field intensity is a maximum value of the magnetic field intensity detected by the magnetic induction sensor during the rotation of the mower to the right side of the charging station. Specifically, in the process of controlling the mower to rotate from the first preset position to the left and right sides of the charging station, a magnetic field intensity on the left and right sides of the charging station is detected by the magnetic induction sensor, the mower is controlled to rotate at a reduced speed when it is detected that the magnetic field intensity changes from increasing to decreasing, and the mower is controlled to stop rotating when the mower rotates to a second preset angle.

In a specific implementation, the mower may be controlled to rotate from the first preset position to the left and right sides of the charging station respectively, so as to drive the magnetic induction sensor to rotate to the left and right sides of the charging station. When the mower is controlled to rotate to the left and right sides of the charging station respectively, it is determined whether the magnetic field intensity detected by the magnetic induction sensor first increases and then decreases; if it is determined that the magnetic field intensity first increases and then decreases, a first magnetic field intensity and a second magnetic field intensity are determined, and the rotation inside the working region and outside the working region are further determined through the first magnetic field intensity and the second magnetic field intensity.

As an example, first, the mower is controlled to rotate to the left side from the first preset position, the magnetic field intensity detected by the magnetic induction sensor first increases to a first magnetic field intensity, and then decreases, at which point the mower is controlled to rotate at a reduced speed. The mower is controlled to stop rotating when the mower rotates to a second preset angle. Then, the mower is controlled to rotate to the right side from the first preset position, the magnetic field intensity detected by the magnetic induction sensor first increases to a second magnetic field intensity, and then decreases, at which point the mower is controlled to rotate at a reduced speed. The mower is controlled to stop rotating when the mower rotates to a second preset angle or the mower is controlled to stop rotating when the mower moves to a second preset distance. Further, the step of determining the inside of the working region and the outside of the working region according to the magnetic field intensity on the left and right sides of the charging station specifically includes: comparing the first magnetic field intensity with the second magnetic field intensity, if the first magnetic field intensity is greater than the second magnetic field intensity, determining that the left side of the charging station is the inside of the working region and the right side of the charging station is the outside of the working region; and if the first magnetic field intensity is less than the second magnetic field intensity, determining that the right side of the charging station is the inside of the working region and the left side of the charging station is the outside the working region.

In an embodiment, when the mower is controlled to rotate from the first preset position to the left and right sides of the charging station, the mower is controlled to rotate from the first preset position to the left and right sides of the charging station by a third preset angle, where the third preset angle is not less than an angle at which the magnetic induction sensor detects the maximum magnetic field intensity or a preset fixed angle. That is to say, the magnetic field intensity detected by the magnetic induction sensor increases within a certain angle away from the boundary wire, and beyond that angle, the magnetic field intensity detected by the magnetic induction sensor gradually decreases. Therefore, in this embodiment, it is necessary to control the mower to rotate by the angle at which the magnetic induction sensor detects the maximum magnetic field intensity, or pre-detect the angle required for the mower to rotate when the magnetic field intensity detected by the magnetic induction sensor reaches the maximum value, then solidify the angle to form a fixed angle, and directly move the mower by the fixed angle when controlling the mower to rotate.

If multiple magnetic induction sensors are used, the third preset angle includes an angle at which any magnetic induction sensor detects the maximum magnetic field intensity or a fixed angle preset by any magnetic induction sensor. Specifically, if multiple magnetic induction sensors are used, the magnetic induction sensors are typically installed on both sides of the mower.

Thus, it is only necessary to select one magnetic induction sensor as a reference, and an angle of rotation of the mower is controlled to be an angle at which the magnetic induction sensor detects the maximum magnetic field intensity or a fixed angle preset by the magnetic induction sensor.

In another embodiment, when the mower is controlled to rotate from the first preset position to the left and right sides of the charging station, the mower is controlled to shift from the first preset position to the left and right sides of the charging station by a second preset distance respectively, where the second preset distance is not less than a corresponding distance when the magnetic field intensity detected by the magnetic induction sensor reaches a maximum value. That is to say, the magnetic field intensity detected by the magnetic induction sensor increases within a certain distance away from the boundary wire, and beyond that distance, the magnetic field intensity detected by the magnetic induction sensor gradually decreases. Therefore, in this embodiment, it is necessary to control the mower to move to the corresponding distance when the magnetic field intensity detected by the magnetic induction sensor reaches the maximum value, or pre-detect the distance required for the mower to move when the magnetic field intensity detected by the magnetic induction sensor reaches the maximum value, then solidify the distance to form a fixed distance, and directly move the mower by the fixed distance when controlling the mower to move.

If multiple magnetic induction sensors are used, the second preset distance includes a corresponding distance when the magnetic field intensity detected by any magnetic induction sensor reaches a maximum value or a fixed distance preset by any magnetic induction sensor. Specifically, if multiple magnetic induction sensors are used, the magnetic induction sensors are typically installed on both sides of the mower. In this case, it is only necessary to select one magnetic induction sensor as a reference, and a distance of movement of the mower is controlled to be a corresponding distance when the maximum magnetic field intensity detected by the reference magnetic induction sensor reaches a maximum value or a fixed distance preset by the magnetic induction sensor.

Embodiment four

On the basis of the above embodiment, an embodiment of the present disclosure further explains a solution for the mower to continue the operation after charging. In the control method for a mower provided in the embodiment of the present disclosure, controlling the mower to move forward from the first preset position and bypass the charging station to reach the back side of the charging station in S502 specifically includes:

    determining a first posture in which the mower starts
    operating at the back side of the charging station;

generating a first path along which the mower moves forward from the first preset position to an operation position according to the first posture; and

controlling the mower to move forward from the first preset position along the first path to the operation position.

In order to accurately plan a path for the mower to continue operating after charging and avoid missing any working region, in the embodiment of the present disclosure, when controlling the mower to move forward from the first preset position and bypass the charging station to reach the back side of the charging station, a first posture in which the mower starts operating at the back side of the charging station is first determined according to the mode in which the mower is to be controlled to continue operating (the operating mode before charging may be continued or the operating mode may be reset). For example, in the wire-following operation mode, an operation position where the mower starts operating at the back side of the charging station may be selected to be on the wire or within a sensing region around the wire. In the in-region mowing mode, the operation position where the mower starts operating at the back side of the charging station may be selected to be on the wire or within a sensing region around the wire, or a position in the working region at the back side of the charging station that is close to the charging station may be selected, or a path node on the wire close to the charging station may be selected. The posture in which the mower starts operating at the back side of the charging station may be an adjusted posture after the mower reaches the position to start operating at the back side of the charging station, that is, the posture is adjusted on the spot before continuing the operation; or may be a posture after the mower reaches the position to start operating at the back side of the charging station according to the path along which the mower bypasses the charging station, and the posture is then adjusted while operating.

A first path along which the mower moves forward from the first preset position to an operation position is generated according to the first posture in which the mower starts operating at the back side of the charging station. Specifically, the first path may be generated according to the coordinates of the first preset position, the coordinates of the operation position, the position of a known obstacle, and the first path traveled in the historical record. The first path from the first preset position to the operation position can bypass the charging station and avoid the obstacle, and can avoid repeatedly crushing the lawn at the same position.

When controlling the mower to move forward from the first preset position along the first path to the operation position, the preset first path cannot be executed due to the fact that there is an unknown obstacle on the path or the ground is slippery. When the first path cannot be executed, precise positioning may be achieved by sensing the position of the wire before replanning the path to the operation position.

The first path may not be a precise path, that is, as introduced in embodiment two of the present disclosure, the mower may bypass the charging station by sensing a wire that is wound around the charging station.

On this basis, in order to avoid burden on mower components and damage to the lawn due to large-scale on-the-spot turns of the mower on the lawn, the first path may be set to ensure that the adjusted angle of the mower at the operation position is less than a first preset angle. The first preset angle may be an angle less than 90°, or may be set according to the type of the mower and the type of the lawn, or different first preset angles may be set at different positions in the working region, such that the mower is able to reduce large-scale on-the-spot turns at positions where the lawn is dense, and perform larger-scale on-the-spot turns at positions where the lawn is sparse.

When the range of the working region is large, the mower may need to be charged multiple times during operation. In this case, determining the first posture in which the mower starts operating at the back side of the charging station may specifically include:
for each operation, determining a different first posture in which the mower starts operating at the back side of the charging station.

Specifically, when planning an operation position where mowing operation is continued after each charging, a different operation position is selected, and then the mower travels along different operation paths from different operation positions, thereby further improving the operation efficiency of the mower by going to a different operation position each time on the basis of ensuring that the operation direction is consistent with the direction of the entrance and exit side of the charging station.

Embodiment five

On the basis of the above embodiment, a first wire may be arranged around the working region of the mower, and a second wire may be arranged around the charging station.

In this case, controlling the mower to exit by the first preset distance from the entrance and exit side of the charging station to reach the first preset position specifically includes: controlling the mower to exit by the first preset distance from the entrance and exit side of the charging station to reach the first preset position based on the first wire.

Controlling the mower to perform the operation at the back side of the charging station specifically includes: controlling the mower to perform the operation at the back side of the charging station based on the first wire.

Generating the first path along which the mower moves forward from the first preset position to the operation position according to the first posture specifically includes: generating the first path along which the mower moves forward from the first preset position along the second wire to the operation position according to the first posture.

In a specific implementation, the first wire may be the boundary wire introduced in the above embodiment of the present disclosure, such as the boundary wire d1 shown in FIG. 6 and FIG. 7. The second wire may be the wire that is wound around the charging station 102 as introduced in the above embodiment of the present disclosure. The second wire may be the charging cable of the charging station 102, or may be provided additionally.

As shown in FIG. 6 and FIG. 7, the first wire may pass through the central axis of the charging station 102. The entrance and exit side of the charging station 102 and the back side of the charging station 102 respectively face two directions of the first wire. The first preset position B may be located on the first wire, that is, the mower 101 retreats along the first wire to the first preset position B after charging. By sensing the second wire, the position of the charging station 102 may be known, and then a region on the back side of the charging station 102 and the position where mowing operation is continued may be determined. Therefore, in the embodiment of the present disclosure, after determining the first posture of the mower 101 at the operation position where mowing operation is continued, a first path for the mower 101 to move forward from the first preset position along the second wire to the operation position is generated, and the mower 101 is controlled to move forward along the first path by sensing the second wire.

The first wire and the second wire may be different types of wires, such that the mower 101 may determine a position relationship between the mower 101 and each of the first wire and the second wire by sensing different signals. In a case where the operation is continued from the boundary wire in the wire-following operation mode and the in-region mowing operation mode or precise repositioning is required because of failing to execute the first path in the in-region mowing operation mode, as shown in FIG. 6 and FIG. 7, the mower 101 may sense the first wire at the first preset position B, determine the first path to bypass the charging station 102 by sensing the second wire, and then go to the position C on the first wire by sensing the first wire.

As introduced in embodiment two of the present disclosure, when controlling the mower 101 to bypass the charging station 102 from the first preset position B and move forward to the operation position where mowing operation is continued, a position relationship between the wire and the walking wheel is adjusted by sensing the wire arranged around the charging station 102. On this basis, by adopting the solution for setting the first wire and the second wire provided in the embodiment of the present disclosure, a signal waveform of the first wire may be set as a signal waveform a, and a signal waveform of the second wire may be set as a signal waveform b. Thus, when the mower 101 travels on the first wire, the third sensor for sensing the first wire on the mower 101 senses the signal waveform a, such that the walking wheels on both sides of the mower 101 are controlled to travel on both sides of the first wire. Specifically, a movement position of the mower 101 may be controlled by controlling a signal intensity of the signal waveform a sensed by the third sensor. If the third sensor is arranged between the walking wheels on both sides of the mower 101, when the signal waveform a is sensed, the mower 101 is controlled to move in a way such that the signal sensed by the third sensor is the strongest. Thus, the walking wheels on both sides of the mower 101 may be controlled to travel on both sides of the first wire by controlling the signal intensity of the signal waveform a sensed by the third sensor. Similarly, if the third sensor for sensing the second wire on the mower 101 (which may be identical to or different from the third sensor for sensing the first wire) senses the signal waveform b, the intensity of waveform sensed by the third sensor may be controlled to be within a preset threshold range, to control the walking wheel of the mower 101 on the side close to the charging station 102 to travel along the second wire, such that the second wire is close to the walking wheel of the mower 101 on the side near the charging station 102 and is located on the inner side or outer side of the walking wheel.

The first wire and the second wire may send signal waveforms simultaneously or may send signal waveforms alternately. The sending form of signal waveforms may refer to the introduction of the above embodiment of the present disclosure, but is not limited to the sending form provided in the above embodiment of the present disclosure.

Various embodiments corresponding to the control method for a mower is described in detail above. On this basis, the present disclosure further discloses a control device for a mower and a storage medium corresponding to the above method.

Embodiment six

FIG. 8 is a schematic structural diagram of a control device for a mower provided in an embodiment of the present disclosure.

As shown in FIG. 8, the control device for a mower provided in the embodiment of the present disclosure includes:

a memory 810 configured to store a computer program 811; and

a processor 820 configured to execute the computer program 811, where the computer program 811, when executed by the processor 820, implements the control method for a mower as described in any one of the above embodiments.

The processor 820 may include one or more processing cores, such as a 3-core processor, an 8-core processor, and the like. The processor 820 may be implemented in at least one hardware form of a Digital Signal Processing (DSP), a Field-Programmable Gate Array (FPGA), and a Programmable Logic Array (PLA). The processor 820 may further include a main processor and a coprocessor. The main processor is a processor for processing data in an awake state, also called a Central Processing Unit (CPU). The coprocessor is a low-power processor for processing data in a standby state. In some embodiments, the processor 820 may be integrated with a Graphics Processing Unit (GPU), where the GPU is responsible for rendering and drawing the content to be displayed on a display screen. In some embodiments, the processor 820 may further include an artificial intelligence (AI) processor, where the AI processor is configured to process computing operations related to machine learning.

The memory 810 may include one or more storage media, which may be non-transitory. The memory 810 may further include a high-speed random access memory, and a non-volatile memory, such as one or more disk storage devices, flash memory storage devices. In this embodiment, the memory 810 is at least configured to store the following computer program 811, where the computer program 811, after being loaded and executed by the processor 820, implements the relevant steps in the control method for a mower disclosed in any of the above embodiments. In addition, the resources stored in the memory 810 may further include an operating system 812 and data 813, and the like, and the storage may be temporary storage or permanent storage. The operating system 812 may be Windows. The data 813 may include but is not limited to the data involved in the above method.

In some embodiments, the control device for a mower may further include a display screen 830, a power supply 840, a communication interface 850, an input/output interface 860, a sensor 870, and a communication bus 880.

Those having ordinary skill in the art will appreciate that the structure shown in FIG. 8 does not constitute a limitation on the control device for a mower and may include more or fewer components than those shown in the figure.

The control device for a mower provided in the embodiment of the present disclosure includes a memory and a processor, where the processor, when executing a program stored in the memory, implements the control method for a mower as described above, and the effect is the same as above.

Embodiment seven

It should be noted that the above-described embodiments of the apparatus and device are merely illustrative. For example, the division of modules is merely a logical function division. There may be other division methods in actual implementation. For example, a plurality of modules or components may be combined or integrated into another system, or some features may be ignored or not executed. Another point is that the mutual coupling or direct coupling or communication connection shown or discussed may be indirect coupling or communication connection through some interfaces, apparatuses or modules, which may be electrical, mechanical or other forms. Modules described as separate components may or may not be physically separated, and components displayed as modules may or may not be physical modules, that is, they may be located in one place or may be distributed over multiple network modules. Some or all of the modules may be selected according to actual needs to achieve the objective of the solution in this embodiment.

In addition, each function module in each embodiment of the present disclosure may be integrated into one processing module, or each module may exist physically separately, or two or more modules may be integrated into one module. The above integrated modules may be implemented in the form of hardware or in the form of software function modules.

The integrated modules, if implemented in the form of software function modules and sold or used as independent products, may be stored in one storage medium. Based on this understanding, the technical solution of the present disclosure, or the part that contributes to the prior art, or all or part of the technical solution can be embodied in the form of a software product. The computer software product is stored in a storage medium and executes all or some of the steps of the method described in each embodiment of the present disclosure.

To this end, an embodiment of the present disclosure further provides a storage medium storing a computer program, where the computer program, when executed by a processor, implements the control method for a mower.

The storage medium may include: various media that can store program codes, such as a USB flash disk, a mobile hard disk, a Read-Only Memory (ROM), a Random Access Memory (RAM), a magnetic disk or a compact disc.

The computer program contained in the storage medium provided in this embodiment may implement the steps of the control method for a mower as described above when executed by the processor, and the effect is the same as above.

The control method and device for a mower, and the storage medium provided by the present disclosure are introduced in detailed above. The various embodiments in the specification are described in a progressive manner, and each embodiment focuses on the differences from other embodiments. The same or similar parts between the various embodiments can be referenced to each other. As for the device and storage medium disclosed in the embodiment, since they correspond to the method disclosed in the embodiment, the

description is relatively simple, and the relevant parts can be referred to the description of the method. It should be pointed out that for those of ordinary skills in the art, several improvements and modifications can be made to the present disclosure without departing from the principle of the present disclosure, and these improvements and modifications also fall within the scope of protection of the claims of the present disclosure.

**[0113]** It should also be noted that, in this specification, relational terms such as first and second, and the like are merely used to distinguish one entity or operation from another entity or operation, and do not necessarily require or imply any actual relationship or order between these entities or operations. Moreover, the terms "comprises," "comprising," or any other variations thereof are intended to cover non-exclusive inclusion, such that a process, method, article, or apparatus that includes a list of elements includes not only those elements but also other elements not expressly listed, or also includes elements inherent to such process, method, article, or apparatus. Without more constraints, an element defined by the phrase "comprising a..." does not exclude the existence of other identical elements in the process, method, article or apparatus comprising the element.

## Claims

1. A control method for a mower, comprising:

   upon completion of charging, controlling the mower to exit by a first preset distance from an entrance and exit side of a charging station to reach a first preset position;
   controlling the mower to move forward from the first preset position and bypass the charging station to reach a back side of the charging station, wherein the back side is opposite to the entrance and exit side of the charging station; and
   controlling the mower to perform an operation at the back side of the charging station.

2. The control method according to claim 1, wherein the controlling the mower to exit by a first preset distance from an entrance and exit side of a charging station to reach a first preset position comprises:
   controlling the mower to exit by the first preset distance from the entrance and exit side of the charging station to reach the first preset position based on a first wire, wherein the first wire is a wire wound around a working region of the mower.

3. The control method according to claim 1, wherein the controlling the mower to exit by a first preset distance from an entrance and exit side of a charging station to reach a first preset position comprises:
   controlling the mower to exit by the first preset distance from the entrance and exit side of the charging station according to a different retreating path each time to reach a different first preset position.

4. The control method according to claim 1, wherein the controlling the mower to move forward from the first preset position and bypass the charging station to reach a back side of the charging station comprises:

   determining a first posture in which the mower starts operating at the back side of the charging station;
   generating a first path along which the mower moves forward from the first preset position to an operation position according to the first posture; and
   controlling the mower to move forward from the first preset position along the first path to the operation position.

5. The control method according to claim 4, wherein the generating a first path along which the mower moves forward from the first preset position to an operation position according to the first posture comprises:
   generating the first path along which the mower moves forward from the first preset position along a second wire to the operation position according to the first posture, wherein the second wire is a wire wound around the charging station.

6. The control method according to claim 4, wherein the first path satisfies that an angle of the mower adjusted at the operation position is less than a first preset angle.

7. The control method according to claim 4, wherein the determining a first posture in which the mower starts operating at the back side of the charging station comprises:
   for each operation, determining a different first posture in which the mower starts operating at the back side of the charging station.

8. The control method according to claim 1, wherein the controlling the mower to move forward from the first preset position and bypass the charging station to reach a back side of the charging station comprises:
   controlling the mower to move forward from the first preset position and bypass the charging station from any one of left and right sides of the charging station to reach the back side of the charging station.

9. The control method according to claim 1, wherein the controlling the mower to move forward from the first preset position and bypass the charging station to reach a back side of the charging station comprises:
   controlling the mower to move forward from the first preset position and bypass the charging station from

left and right sides of the charging station alternately to reach the back side of the charging station.

10. The control method according to any one of claims 1 to 9, wherein before the controlling the mower to move forward from the first preset position and bypass the charging station to reach a back side of the charging station, the method comprises:

> controlling the mower to rotate from the first preset position to left and right sides of the charging station respectively, and determining, by a magnetic induction sensor, a magnetic field intensity on the left and right sides of the charging station; and
> determining an inside of the working region and an outside of the working region according to the magnetic field intensity on the left and right sides of the charging station.

11. The control method according to claim 10, wherein the determining, by a magnetic induction sensor, a magnetic field intensity on the left and right sides of the charging station comprises:

> during controlling the mower to rotate from the first preset position to the left and right sides of the charging station respectively, detecting, by the magnetic induction sensor, a change in the magnetic field intensity on the left and right sides of the charging station; and
> determining a first magnetic field intensity and a second magnetic field intensity according to the change in the magnetic field intensity, wherein the first magnetic field intensity is a maximum value of the magnetic field intensity detected by the magnetic induction sensor during rotation of the mower to the left side of the charging station, and the second magnetic field intensity is a maximum value of the magnetic field intensity detected by the magnetic induction sensor during rotation of the mower to the right side of the charging station.

12. The control method according to claim 10, wherein during controlling the mower to rotate from the first preset position to the left and right sides of the charging station respectively, the method further comprises:

> detecting the magnetic field intensity on the left and right sides of the charging station;
> controlling the mower to rotate at a reduced speed in response to the magnetic field intensity changing from increasing to decreasing;
> controlling the mower to stop rotating in response to the mower rotating to a second preset angle, or controlling the mower to stop rotating in response to the mower moving to a second preset distance.

13. The control method according to claim 11, wherein the determining an inside of the working region and an outside of the working region according to the magnetic field intensity on the left and right sides of the charging station comprises:

> in response to the first magnetic field intensity being greater than the second magnetic field intensity, determining that the left side of the charging station is the inside of the working region and the right side of the charging station is the outside of the working region; and
> in response to the first magnetic field intensity being less than the second magnetic field intensity, determining that the right side of the charging station is the inside of the working region and the left side of the charging station is the outside of the working region.

14. The control method according to claim 10, wherein the controlling the mower to rotate from the first preset position to left and right sides of the charging station respectively comprises:
controlling the mower to rotate from the first preset position to the left and right sides of the charging station by a third preset angle, wherein the third preset angle is not less than an angle at which the magnetic induction sensor detects a maximum magnetic field intensity.

15. The control method according to claim 14, wherein the magnetic induction sensor is provided in plural, and the third preset angle comprises an angle at which any one of the magnetic induction sensors detects the maximum magnetic field intensity.

16. The control method according to claim 10, wherein the controlling the mower to rotate from the first preset position to left and right sides of the charging station respectively comprises:
controlling the mower to shift from the first preset position to the left and right sides of the charging station by a second preset distance respectively, wherein the second preset distance is not less than a distance at which the magnetic induction sensor detects a maximum magnetic field intensity.

17. The control method according to claim 16, wherein the magnetic induction sensor is provided in plural, the second preset distance comprises a distance at which any one of the magnetic induction sensors detects the maximum magnetic field intensity.

18. A control device for a mower, comprising:

a memory configured to store a computer program; and
a processor configured to execute the computer program, wherein the computer program, when executed by the processor, implements the control method for a mower according to any one of claims 1 to 17.

19. A storage medium, storing a computer program, wherein the computer program, when executed by a processor, implements the control method for a mower according to any one of claims 1 to 17.

FIG. 1

FIG. 2

FIG. 3

FIG. 4

Upon completion of charging, controlling the mower to exit by a first preset distance from an entrance and exit side of a charging station to reach a first preset position ⸺ S501

Controlling the mower to move forward from the first preset position and bypass the charging station to reach a back side of the charging station, which is opposite to the entrance and exit side of the charging station ⸺ S502

Controlling the mower to operate at the back side of the charging station ⸺ S503

FIG. 5

FIG. 6

FIG. 7

FIG. 8

## INTERNATIONAL SEARCH REPORT

| International application No. |
| --- |
| **PCT/CN2023/116872** |

**A. CLASSIFICATION OF SUBJECT MATTER**

A01D34/00(2006.01)i

According to International Patent Classification (IPC) or to both national classification and IPC

**B. FIELDS SEARCHED**

Minimum documentation searched (classification system followed by classification symbols)

IPC:A01D34

Documentation searched other than minimum documentation to the extent that such documents are included in the fields searched

Electronic data base consulted during the international search (name of data base and, where practicable, search terms used)

CNTXT, VEN, CNKI: 割草机, 充电站, 控制, 传感器, 磁场, lawn, mower, cropper, grass cutter, charging, station, cotrol+, sensor, transducer, magnetic, field

**C. DOCUMENTS CONSIDERED TO BE RELEVANT**

| Category* | Citation of document, with indication, where appropriate, of the relevant passages | Relevant to claim No. |
| --- | --- | --- |
| X | CN 215122126 U (GLOBE (JIANGSU) CO., LTD.) 14 December 2021 (2021-12-14) description, paragraphs [0040]-[0067], and figures 1-14 | 1-19 |
| A | CN 112703881 A (GLOBE (JIANGSU) CO., LTD.) 27 April 2021 (2021-04-27) entire document | 1-19 |
| A | CN 113519253 A (NINGBO RUILIN MACHINERY TECHNOLOGY CO., LTD.) 22 October 2021 (2021-10-22) entire document | 1-19 |
| A | CN 115129062 A (AGILE ROBOTICS (SHENZHEN) CO., LTD.) 30 September 2022 (2022-09-30) entire document | 1-19 |
| A | EP 3381257 A1 (HONDA RESEARCH INSTITUTE EUROPE GMBH) 03 October 2018 (2018-10-03) entire document | 1-19 |
| A | US 2012029753 A1 (JOHNSON DAVID A et al.) 02 February 2012 (2012-02-02) entire document | 1-19 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **31 October 2023** | **11 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/116872**

| Patent document cited in search report | | | Publication date (day/month/year) | Patent family member(s) | | | Publication date (day/month/year) |
|---|---|---|---|---|---|---|---|
| CN | 215122126 | U | 14 December 2021 | None | | | |
| CN | 112703881 | A | 27 April 2021 | None | | | |
| CN | 113519253 | A | 22 October 2021 | None | | | |
| CN | 115129062 | A | 30 September 2022 | None | | | |
| EP | 3381257 | A1 | 03 October 2018 | US | 2018284806 | A1 | 04 October 2018 |
| | | | | US | 10824163 | B2 | 03 November 2020 |
| | | | | EP | 3381257 | B1 | 02 December 2020 |
| US | 2012029753 | A1 | 02 February 2012 | EP | 2413215 | A2 | 01 February 2012 |
| | | | | EP | 2413215 | A3 | 23 January 2013 |
| | | | | EP | 2413215 | B1 | 05 March 2014 |
| | | | | US | 8433468 | B2 | 30 April 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 2023103584865